(19) Europäisches Patentamt / European Patent Office / Office européen des brevets

(11) **EP 2 163 955 B1**

(12) **EUROPÄISCHE PATENTSCHRIFT**

(45) Veröffentlichungstag und Bekanntmachung des Hinweises auf die Patenterteilung:
**16.03.2011 Patentblatt 2011/11**

(51) Int Cl.:
*G05B 13/04* (2006.01)    *H02P 23/12* (2006.01)

(21) Anmeldenummer: **08164149.0**

(22) Anmeldetag: **11.09.2008**

(54) **Verfahren zur Schätzung von Kapazitiven und Induktiven Zuständen eines Motors auf einem Kalman Filter basierend**

State estimation method based on a Kalman filter for capacitive and inductive motor states

Procédé d'estimation par filtre Kalman des états capacitifs et inductifs d'un moteur

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**17.03.2010 Patentblatt 2010/11**

(73) Patentinhaber: **ABB Research LTD**
**8050 Zürich (CH)**

(72) Erfinder:
• **Gaulocher, Sebastian**
  **4800 Zofingen (CH)**
• **Papafotiou, Georgios**
  **8134 Adliswil (CH)**

(74) Vertreter: **ABB Patent Attorneys**
**C/o ABB Schweiz AG**
**Intellectual Property (CH-LC/IP)**
**Brown Boveri Strasse 6**
**5400 Baden (CH)**

(56) Entgegenhaltungen:
**EP-A- 1 253 706    EP-A- 1 670 135**
**DE-A1- 19 751 375**

• **BOGOSYAN S ET AL: "Braided extended Kalman filters for sensorless estimation in induction motors at high-low/zero speed" 20070709, Bd. 1, Nr. 4, 9. Juli 2007 (2007-07-09), Seiten 987-998, XP006029063**

Bemerkungen:
Die Akte enthält technische Angaben, die nach dem Eingang der Anmeldung eingereicht wurden und die nicht in dieser Patentschrift enthalten sind.

**Beschreibung**

**Technisches Gebiet**

Die Erfindung bezieht sich auf das Gebiet der Schätzverfahren in der Regelungstechnik. Sie geht aus von einem Verfahren zur Schätzung von Zuständen eines leistungselektronischen Systems gemäss dem Oberbegriff des unabhängigen Anspruchs.

**Stand der Technik**

Heute werden in vielen Anwendungen leistungselektronische Systeme eingesetzt. Ein solches leistungselektronisches System umfasst typischerweise eine Umrichterschaltung mit einer Vielzahl an ansteuerbaren Leistungshalbleiterschaltern und einer zugehörigen Ansteuerschaltung für die ansteuerbare Leistungshalbleiterschaltung. Mit der Umrichterschaltung sind normalerweise eine oder mehrere Lasten verbunden, welche aber stark über der Zeit, beispielsweise infolge von Störungen, variieren können. Eine solche Last können beispielsweise ein oder mehrere Motoren sein, wobei allgemein jedwede elektrische Last denkbar ist. Zustände des leistungselektronischen Systems, wie beispielsweise ein induktiver Laststrom und eine kapazitive Lastspannung, sind konkret von solchen Variationen betroffen und können schwer, d.h. nur mit einem erheblichen Aufwand, oder gar nicht, beispielsweise durch Messung, erfasst werden. Somit ist es notwendig, Zustände des leistungselektronischen Systems zu schätzen, wobei die abgeschätzten Zustände dann in einer Regelungseinheit weiterverarbeitet werden können. Ein gängiges Verfahren zur Abschätzung von Zuständen in einem leistungselektronischen System ist die Verwendung eines zeitdiskreten Kalman-Filters, wie es beispielsweise in "Braided extended Kalman filters for sensorless estimation in inductionmotors at high-low/zero speed", IET Control Theory, Appl., 2007 angegeben ist. Um eine Abschätzung von Zuständen, beispielsweise unter Verwendung eines zeitdiskreten Kalman-Filters, durchführen zu können, müssen zunächst folgende Verfahrensschritte erfolgen:

(a)   Bestimmen von Ausgangsgrössenvektoren y(k) für die Abtastzeitpunkte k=-N+1 bis k=0, wobei N ein vorgebbarer Abtasthorizont ist und y eine Ausgangsgrösse dabei bei- spielsweise die Umrichterausgangsspannung ist, welche zum Beispiel durch Messung ermittelbar ist,

(b)   Bestimmen von Stellgrössenvektoren u(k) für die Abtastzeitpunkte k=-N+1 bis k=0, wobei die Stellgrösse beispielsweise der Aussteuerungsgrad der Umrichterschaltung ist,

(c)   Bestimmen einer ersten Systemmodellfunktion f(x(k), u(k)) zum Abtastzeitpunkt k zur Beschreibung des leistungselektronischen Systems, welche abhängig vom Stellgrös- senvektor u(k) und von einem Systemzustandsvektor x(k) zum Abtastzeitpunkt k ist, und

(d)   Bestimmen einer zweiten Systemmodellfunktion g(x(k), u(k)) zum Abtastzeitpunkt k zur Beschreibung des leistungselektronischen Systems, welche abhängig vom Stellgrös- senvektor u(k) und vom Systemzustandsvektor x(k) zum Abtastzeitpunkt k ist.

Problematisch beim Einsatz eines zeitdiskreten Kalman-Filters zur Abschätzung von Zuständen x des leistungselektronischen Systems ist, dass Nebenbedingungen der Zustände, wie beispielsweise dass der induktive Laststrom und/oder die kapazitive Lastspannung begrenzt sind oder nicht negativ sein können, nur mit sehr grossem Aufwand oder gar nicht berücksichtigt werden können. Ein weiteres Problem für das Kalman-Filter stellen stückweise affin-lineare Systemmodellfunktionen f(x(k), u(k)), g(x(k), u(k)), welche ein gegebenes leistungselektronisches System beschreiben, dar, da diese ebenfalls entweder nicht oder nur mit einem sehr grossen Mass an Aufwendungen bei der Abschätzung mittels des zeitdiskreten Kalman-Filters berücksichtigt werden können.

**Darstellung der Erfindung**

Aufgabe der Erfindung ist es deshalb, Verfahren zur Abschätzung von Zuständen eines leistungselektronischen Systems anzugeben, welches eine Abschätzung von Zuständen für ein breites Spektrum an leistungselektronischen Systemen erlaubt und welches sich zudem einfach realisieren lässt. Diese Aufgabe wird durch die Merkmale des Anspruchs 1 gelöst. In den abhängigen Ansprüchen sind vorteilhafte Weiterbildungen der Erfindung angegeben.

Beim erfindungsgemässen Verfahren zur Abschätzung von Zuständen eines leistungselektronischen Systems weist das System eine Umrichterschaltung auf. Das Verfahren weist folgende Schritte auf:

(a) Bestimmen von Ausgangsgrössenvektoren y(k) für die Abtastzeitpunkte k=-N+1 bis k=0, wobei N ein vorgebbarer Abtasthorizont ist,

(b) Bestimmen von Stellgrössenvektoren u(k) für die Abtastzeitpunkte k=-N+1 bis k=0,

(c) Bestimmen einer ersten Systemmodellfunktion f(x(k), u(k)) zum Abtastzeitpunkt k zur Beschreibung des leistungselektronischen Systems, welche abhängig vom Stellgrössenvektor u(k) und von einem Systemzustandsvektor x(k) zum Abtastzeitpunkt k ist,

(d) Bestimmen einer zweiten Systemmodellfunktion g(x(k), u(k)) zum Abtastzeitpunkt k zur Beschreibung des leistungselektronischen Systems, welche abhängig vom Stellgrössenvektor u(k) und vom Systemzustandsvektor x(k) zum Abtastzeitpunkt k ist,

Nach der Erfindung erfolgt die Abschätzung eines Systemzustandsvektors x(k) zum Abtastzeitpunkt k=0 in folgenden weiteren Schritten:

(e) Variieren des Systemzustandsvektors x(k) und des Systemzustandsvektors x(k+1) für jeden der Abtastzeitpunkte k=-N+1 bis k=0, so dass die Summe der Addition der Vektornorm aus der Subtraktion aus dem Systemzustandsvektor x(k+1) und der ersten Systemmodellfunktion f(x(k), u(k)) und der Vektornorm aus der Subtraktion aus dem Ausgangsgrössenvektor y(k) und der zweiten Systemmodellfunktion g(x(k), u(k)) über die Abtastzeitpunkte k=-N+1 bis k=0 minimal wird,

(f) Auswahl des Systemzustandsvektors x(k) zum Abtastzeitpunkt k=0, und

(g) die erste Systemmodellfunktion f(x(k), u(k)) und die zweite Systemmodellfunktion g(x(k), u(k)) ist jeweils affin-linear oder alternativ jeweils stückweise affin-linear oder stückweise affin-linear.

Die gewünschten abgeschätzten Zustände zum gegenwärtigen, d.h. zum aktuellen Zeitpunkt k=0 sind dann als Vektorelemente des Systemzustandsvektors x(k) zum Abtastzeitpunkt k=0, d.h. im Systemzustandsvektor x(0), enthalten. Vorteilhaft erlaubt das erfindungsgemässe Verfahren, dass bei der Abschätzung der Zustände auch Nebenbedingungen, die stückweise affin-lineare Zusammenhänge der Zustände und Eingänge sind, problemlos berücksichtigt werden können. Ist das leistungselektronische System durch stückweise affin-lineare Systemmodellfunktionen f(x(k), u(k)), g(x(k), u(k)) beschreibbar, können solche Systemmodellfunktionen f(x(k), u(k)), g(x(k), u(k)) ebenfalls mit Vorteil sehr einfach bei der Abschätzung der Zustände berücksichtigt werden. Insgesamt erlaubt das erfindungsgemässe Verfahren damit eine Abschätzung von Zuständen für ein äusserst breites Spektrum an leistungselektronischen Systemen und lässt sich zudem sehr einfach realisieren.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

## Kurze Beschreibung der Zeichnungen

Es zeigt:

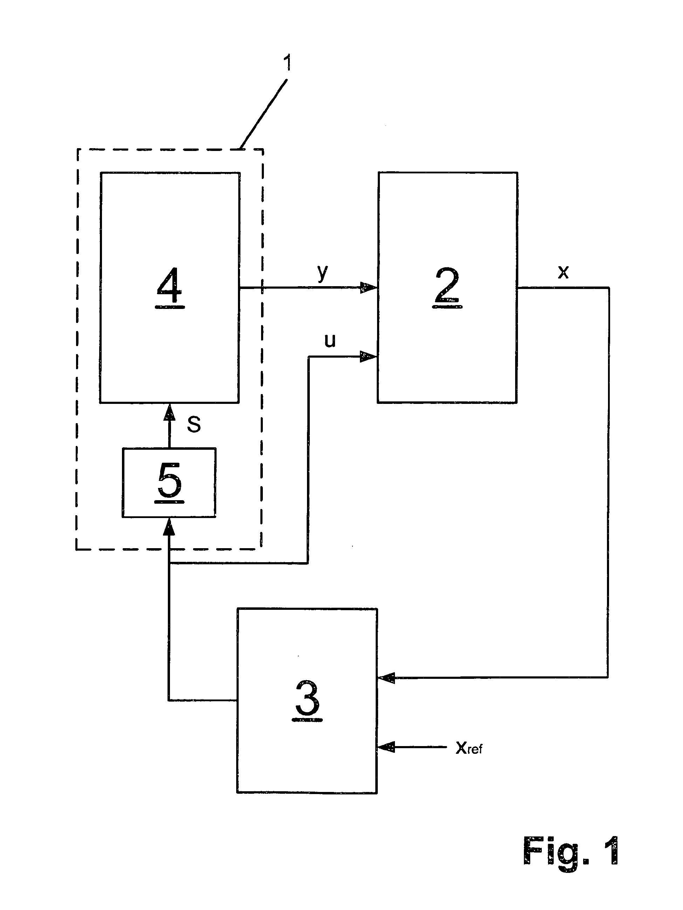

Fig. 1    eine Ausführungsform eines Aufbaus eines leistungselektronischen Systems mit einer Regelungseinheit und mit einer Abschätzvorrichtung, welche eine Abschätzung der Zustände des leistungselektronischen Systems nach dem erfindungsgemässen Verfahren durchführt.

Die in der Zeichnung verwendeten Bezugszeichen und deren Bedeutung sind in der Bezugszeichenliste zusammengefasst aufgelistet. Grundsätzlich sind in der Figur gleiche Teile mit gleichen Bezugszeichen versehen. Die beschriebenen Ausführungsformen stehen beispielhaft für den Erfindungsgegenstand und haben keine beschränkende Wirkung.

## Wege zur Ausführung der Erfindung

In Fig. 1 ist eine Ausführungsform eines Aufbaus eines leistungselektronischen Systems 1 mit einer Regelungseinheit 3 und mit einer Abschätzvorrichtung 2, welche eine Abschätzung der Zustände x des leistungselektronischen Systems 1 nach dem erfindungsgemässen Verfahren durchführt, gezeigt. Eine oder mehrere mit dem leistungselektronischen System 1 verbundene Lasten sind in Fig. 1 der Übersichtlichkeit halber nicht dargestellt. Das leistungselektronische System 1 umfasst eine Umrichterschaltung 4 mit einer Vielzahl an ansteuerbaren Leistungshalbleiterschaltern und einer zugehörigen Ansteuerschaltung 5 zur Ansteuerung der ansteuerbaren Leistungshalbleiter mit einem Ansteuersignal S. Eine solche Ansteuerschaltung 5 generiert das Ansteuersignal S beispielsweise mittels einer Pulsweitenmodulation aus der Stellgrösse u, welche beispielsweise der Aussteuerungsgrad der Umrichterschaltung ist. Eine Ausgangsgrösse y des leistungselektronischen Systems 1 gemäss Fig. 1 ist beispielsweise die Umrichterausgangsspannung, welche zum Beispiel durch Messung ermittelbar ist. Der in Fig. 1 gezeigte Aufbau weist ferner die eingangs bereits erwähnte Abschätzvorrichtung 2 auf, welche eine Abschätzung der Zustände x des leistungselektronischen Systems 1 nach dem erfindungsgemässen Verfahren durchführt. Solche abzuschätzende Zustände x des leistungselektronischen Systems sind beispielsweise ein induktiver Laststrom und eine kapazitive Lastspannung. Auf dieses erfindungsgemässe Verfahren wird nun im Folgenden detailliert eingegangen. In einem Schritt (a) werden Ausgangsgrössenvektoren y(k) für die Abtastzeitpunkte k=-N+1 bis k=0 bestimmt, wobei N ein vorgebbarer Abtasthorizont ist. Die Elemente der Ausgangsgrössenvektoren y(k) sind dann die Ausgangsgrössen y, beispielsweise durch Messung ermittelte Umrichterausgangsspannungen für die Abtastzeitpunkte k=-N+1 bis k=0. In einem Schritt (b) werden Stellgrössenvektoren u(k) für die Abtastzeitpunkte k=-N+1 bis k=0 bestimmt, wobei die Elemente der Stellgrössenvektoren u(k) die Stellgrössen u für die Abtastzeitpunkte k=-N+1 bis k=0, beispielsweise die Aussteuerungsgrade, sind. In einem Schritt (c) wird eine erste Systemmodellfunktion f(x(k), u(k)) zum Abtastzeitpunkt k zur Beschreibung des leistungselektronischen Systems 1 bestimmt, welche abhängig vom Stellgrössenvektor u(k) und von einem Systemzustandsvektor x(k) zum Abtastzeitpunkt k ist. Ferner wird in einem Schritt (d) eine zweite Systemmodellfunktion g(x(k), u(k)) zum Abtastzeitpunkt k zur Beschreibung des leistungselektronischen Systems 1 bestimmt, welche abhängig vom Stellgrössenvektor u(k) und vom Systemzustandsvektor x(k) zum Abtastzeitpunkt k ist.

Die erste Systemmodellfunktion f(x(k), u(k)) zum Abtastzeitpunkt k zur Beschreibung des leistungselektronischen Systems 1 lässt sich allgemein wie folgt bestimmen:

$$f(x(k),u(k)) = \begin{cases} A_1 x(k) + B_1 u(k) + v_1, & F_1 x(k) + E_1 u(k) \le G_1 \\ A_2 x(k) + B_2 u(k) + v_2, & F_2 x(k) + E_2 u(k) \le G_2 \\ \ldots \\ A_M x(k) + B_M u(k) + v_M, & F_M x(k) + E_M u(k) \le G_M \end{cases},$$

wobei $A_1 \ldots A_M$, $B_1 \ldots B_M$, $F_1 \ldots F_M$ und $E_1 \ldots E_M$ Matrizen und $V_1 \ldots V_M$ Vektoren sind und die Vektoren $G_1$ und $G_2$ Grenzen sind, welche die erste Systemmodellfunktion f(x(k), u(k)) als affin-linear oder stückweise affin-linear definieren. Es sei erwähnt, dass durch geeignete Wahl der Vektoren $G_1 \ldots G_M$ sowie $V_1 \ldots V_M$ und Matrizen $A_1 \ldots A_M$, $B_1 \ldots B_M$, $F_1 \ldots F_M$, $E_1 \ldots E_M$ auch eine durchgehend affin-lineare Funktion erreicht werden kann, falls das leistungselektronische System derart zu beschreiben ist.

Die zweite Systemmodellfunktion g(x(k), u(k)) zum Abtastzeitpunkt k zur Beschreibung des leistungselektronischen Systems 1 lässt sich allgemein wie folgt bestimmen:

$$g(x(k),u(k)) = \begin{cases} C_1 x(k) + D_1 u(k) + w_1, & F_1 x(k) + E_1 u(k) \le G_1 \\ C_2 x(k) + D_2 u(k) + w_2, & F_2 x(k) + E_2 u(k) \le G_2 \\ \ldots \\ C_M x(k) + D_M u(k) + w_M, & F_M x(k) + E_M u(k) \le G_M \end{cases},$$

wobei $G_1 \ldots C_M$, $D_1 \ldots D_M$, $F_1 \ldots F_M$, $E_1 \ldots E_M$ Matrizen sind und $W_1 \ldots W_M$ Vektoren und die Vektoren $G_1$ und $G_2$ Grenzen sind, welche die erste Systemmodellfunktion g(x(k), u(k)) ebenfalls als affin-linear oder stückweise affin-linear definieren. Es sei erwähnt, dass durch geeignete Wahl der Vektoren $G_1 \ldots G_M$ sowie $W_1 \ldots W_M$ und Matrizen $C_1 \ldots C_M$, $D_1 \ldots D_M$, $F_1 \ldots F_M$, $E_1 \ldots E_M$ auch eine durchgehend affin-lineare Funktion erreicht werden kann, falls das leistungselektronische System derart zu beschreiben ist.

Erfindungsgemäss erfolgt die Abschätzung eines Systemzustandsvektors x(k) zum Abtastzeitpunkt k=0, d.h. zum aktuellen Zeitpunkt, in nachfolgend beschriebenen weiteren Schritten:

(e) Variieren des Systemzustandsvektors x(k) und des Systemzustandsvektors x(k+1) für jeden der Abtastzeitpunkte k=-N+1 bis k=0, so dass die Summe der Addition der Vektornorm aus der Subtraktion aus dem Systemzustandsvektor x(k+1) und der ersten Systemmodellfunktion f(x(k), u(k)) und der Vektornorm aus der Subtraktion aus dem Ausgangsgrössenvektor y(k) und der zweiten Systemmodellfunktion g(x(k), u(k)) über die Abtastzeitpunkte k=-N+1 bis k=0 minimal wird, und

(f) Auswahl des Systemzustandsvektors x(k) zum Abtastzeitpunkt k=0.

Die gewünschten abgeschätzten Zustände x zum gegenwärtigen, d.h. zum aktuellen Zeitpunkt k=0 sind dann als Vektorelemente des Systemzustandsvektors x(k) zum Abtastzeitpunkt k=0, d.h. im Systemzustandsvektor x(0), enthalten. Beispielhaft wären diese Vektorelemente dann der induktive Laststrom und die kapazitive Lastspannung zum Abtastzeitpunkt k=0. Vorteilhaft erlaubt das erfindungsgemässe Verfahren, dass bei der Abschätzung der Zustände x auch Nebenbedingungen der Zustände x problemlos berücksichtigt werden können. Ist das leistungselektronische System durch eine affin-lineare oder stückweise affin-lineare Systemmodellfunktionen f(x(k), u(k)), g(x(k), u(k)) beschreibbar, können solche Systemmodellfunktionen f(x(k), u(k)), g(x(k), u(k)) ebenfalls mit Vorteil sehr einfach bei der Abschätzung der Zustände x berücksichtigt werden. Das erfindungsgemässe Verfahren ermöglicht damit eine Abschätzung von Zuständen x für ein äusserst breites Spektrum an leistungselektronischen Systemen 1 und lässt sich zudem sehr einfach realisieren.

Die nach dem erfindungsgemässen Verfahren abgeschätzten Zustände x können dann in einer Regelungseinheit 3 weiterverarbeitet werden, d.h. beispielsweise auf zugehörige Sollzustände $x_{ref}$ ausgeregelt werden. Vorzugsweise arbeitet die Regelungseinheit 3 nach dem Modell-Vorhersage-Regelungsprinzip (Model Predictive Control), wie es beispielsweise aus der EP 1 670 135 A1 bekannt ist. Jegliches anderes Regelungsprinzip bzw. jedwede Regelcharakteristik ist allerdings auch denkbar.

Die vorstehend genannte Summe lässt sich als Summe J gemäss nachfolgend genannter Formel beschreiben:

$$ J = \sum_{k=-N+1}^{0} \left( \left\| x(k+1) - f(x(k),u(k)) \right\|_{W_x,q} + \left\| y(k) - g(x(k),u(k)) \right\|_{W_y,q} \right), $$

wobei $W_x$ und $W_y$ Gewichtungsmatrizen bezüglich des Zustandsvektors x(k) und x(k+1) bzw. bezüglich des Ausgangsgrössenvektors y(k) sind. Der Index q gibt die wählbare Vektornorm an. Vorzugsweise wird als Vektornorm aus der Subtraktion aus dem Systemzustandsvektor x(k+1) und der ersten Systemmodellfunktion f(x(k), u(k)), d.h. für den Ausdruck

$$ \left\| x(k+1) - f(x(k),u(k)) \right\|_{W_x,q}, $$

die Betragssummennorm gewählt, wobei dann q=1 ist.

Desweiteren wird vorzugsweise als Vektornorm aus der Subtraktion aus dem Ausgangsgrössenvektor y(k) und der zweiten Systemmodellfunktion g(x(k), u(k)), d.h. für den Ausdruck

$$ \left\| y(k) - g(x(k),u(k)) \right\|_{W_y,q}, $$

ebenfalls die Betragssummennorm gewählt, wobei dann auch q=1 ist. Mit Vorteil lässt sich die Betragssummennorm, d.h. q=1 sehr einfach realisieren.

Alternativ ist es auch denkbar, dass als Vektornorm aus der Subtraktion aus dem Systemzustandsvektor x(k+1) und der ersten Systemmodellfunktion f(x(k), u(k)) und als Vektornorm aus der Subtraktion aus dem Ausgangsgrössenvektor y(k) und der zweiten Systemmodellfunktion g(x(k), u(k)) jeweils die euklidische Norm gewählt wird, d.h. dass q=2 ist.

Als weitere Alternative ist es auch denkbar, dass als Vektornorm aus der Subtraktion aus dem Systemzustandsvektor x(k+1) und der ersten Systemmodellfunktion f(x(k), u(k)) und als Vektornorm aus der Subtraktion aus dem Ausgangsgrössenvektor y(k) und der zweiten Systemmodellfunktion g(x(k), u(k)) jeweils die Maximumsnorm gewählt wird, d.h. dass q=∞ ist.

Es sei erwähnt, das auch weitere Normen denkbar wären. Zudem ist es vorstellbar, dass Normen für die einzelnen Subtraktionen auch unterschiedlich gewählt werden, d.h. es wäre beispielsweise möglich, dass als Vektornorm aus der Subtraktion aus dem Systemzustandsvektor x(k+1) und der ersten Systemmodellfunktion f(x(k), u(k)) die Betragssummennorm gewählt wird, wobei dann q=1 ist, hingegen als Vektornorm aus der Subtraktion aus dem Ausgangsgrössenvektor y(k) und der zweiten Systemmodellfunktion g(x(k), u(k)) die euklidische Norm gewählt wird, d.h. dass q=2 ist. Allgemein sind dabei sämtliche Kombinationen denkbar.

Wie bereits vorstehend beschrieben, wird der Systemzustandsvektor x(k) und der Systemzustandsvektor x(k+1) für jeden der Abtastzeitpunkte k=-N+1 bis k=0 derart variiert, dass die Summe J über die Abtastzeitpunkte k=-N+1 bis k=0 minimal wird. Diese Variationen des Systemzustandsvektors x(k) und des Systemzustandsvektors x(k+1) für jeden der Abtastzeitpunkte k=-N+1 bis k=0 können in einer Tabelle (look-up table) abgelegt sein, wobei dann jedem Ausgangsgrössenvektor y(k) und Stellgrössenvektor u(k) für jeden der Abtastzeitpunkte k=-N+1 bis k=0 ein Systemzustandsvektor x(k) und ein Systemzustandsvektor x(k+1) zugeordnet ist. Aus der Tabelle muss dann lediglich noch der gewünschte Systemzustandsvektor x(k) zum Abtastzeitpunkt k=0, d.h. der Systemzustandsvektor x(0), herausgelesen werden, wobei die Vektorelemente des Systemzustandsvektors x(0) gewünschten abgeschätzten Zustände x zum gegenwärtigen, d.h. zum aktuellen Zeitpunkt k=0 sind. Diese Tabelle kann vorab, d.h. offline, erstellt werden, so dass mit Vorteil keine rechenintensive Berechnung online bei der Variation mit dem Kriterium, dass die Summe J minimal wird, durchgeführt werden muss. Die vorstehend genannte Tabelle kann in der Abschätzvorrichtung 2 oder auf einem separaten Speichermedium, auf welches die Abschätzvorrichtung 2 dann zugreift, abgelegt bzw. gespeichert sein.

Sind hingegen genügend Rechenleistungsresourcen, beispielsweise durch einen Prozessor, insbesondere einen digitalen Signalprozessor, vorhanden, so können die Variationen des Systemzustandsvektors x(k) und des Systemzustandsvektors x(k+1) für jeden der Abtastzeitpunkte k=-N+1 bis k=0 fortlaufend, d.h. online, berechnet werden.

**Bezugszeichenliste**

1    leistungselektronisches System

2    Abschätzvorrichtung

3    Regelungseinheit

4    Umrichterschaltung

5    Ansteuerschaltung

**Patentansprüche**

1. Verfahren zur Abschätzung von Zuständen eines leistungselektronischen Systems (1), wobei das System (1) eine Umrichterschaltung (4) aufweist,
   mit den Schritten

   (a) Bestimmen von Ausgangsgrössenvektoren y(k) für die Abtastzeitpunkte k=-N+1 bis k=0, wobei N ein vorgebbarer Abtasthorizont ist,
   (b) Bestimmen von Stellgrössenvektoren u(k) für die Abtastzeitpunkte k=-N+1 bis k=0,
   (c) Bestimmen einer ersten Systemmodellfunktion f(x(k), u(k)) zum Abtastzeitpunkt k zur Beschreibung des leistungselektronischen Systems (1), welche abhängig vom Stellgrössenvektor u(k) und von einem Systemzustandsvektor x(k) zum Abtastzeitpunkt k ist,
   (d) Bestimmen einer zweiten Systemmodellfunktion g(x(k), u(k)) zum Abtastzeitpunkt k zur Beschreibung des leistungselektronischen Systems (1), welche abhängig vom Stellgrössenvektor u(k) und vom Systemzustandsvektor x(k) zum Abtastzeitpunkt k ist,
   **dadurch gekennzeichnet,**
   **dass** die Abschätzung eines Systemzustandsvektors x(k) zum Abtastzeitpunkt k=0 in folgenden weiteren Schritten erfolgt:
   (e) Variieren des Systemzustandsvektors x(k) und des Systemzustandsvektors x(k+1) für jeden der Abtastzeitpunkte k=-N+1 bis k=0, so dass die Summe der Addition der Vektornorm aus der Subtraktion aus dem Systemzustandsvektor x(k+1) und der ersten Systemmodellfunktion f(x(k), u(k)) und der Vektornorm aus der Subtraktion aus dem Ausgangsgrössenvektor y(k) und der zweiten Systemmodellfunktion über die Abtastzeitpunkte k=-N+1 bis k=0 minimal wird,
   (f) Auswahl des Systemzustandsvektors x(k) zum Abtastzeitpunkt k=0;
   wobei
   (g) die erste Systemmodellfunktion f(x(k), u(k)) und die zweite Systemmodellfunktion g(x(k), u(k)) jeweils affin-linear oder stückweise affin-linear ist.

2. Verfahren nach Anspruch 1 **dadurch gekennzeichnet, dass** als Vektornorm aus der Subtraktion aus dem Systemzustandsvektor x(k+1) und der ersten Systemmodellfunktion f(x(k), u(k)) und als Vektornorm aus der Subtraktion aus dem Ausgangsgrössenvektor y(k) und der zweiten Systemmodellfunktion g(x(k), u(k)) jeweils die Betragssummennorm gewählt wird.

3. Verfahren nach Anspruch 1 **dadurch gekennzeichnet, dass** als Vektornorm aus der Subtraktion aus dem Systemzustandsvektor x(k+1) und der ersten Systemmodellfunktion f(x(k), u(k)) und als Vektornorm aus der Subtraktion aus dem Ausgangsgrössenvektor y(k) und der zweiten Systemmodellfunktion g(x(k), u(k)) jeweils die euklidische Norm gewählt wird.

4. Verfahren nach Anspruch 1 **dadurch gekennzeichnet, dass** als Vektornorm aus der Subtraktion aus dem Systemzustandsvektor x(k+1) und der ersten Systemmodellfunktion f(x(k), u(k)) und als Vektornorm aus der Subtraktion aus dem Ausgangsgrössenvektor y(k) und der rechten Seite der zweiten Systemmodellfunktion g(x(k), u(k)) jeweils die Maximumsnorm gewählt wird.

5. Verfahren nach einem der Ansprüche 1 bis 4, **dadurch gekennzeichnet, dass** die Variationen des Systemzustandsvektors x(k) und des Systemzustandsvektors x(k+1) für jeden der Abtastzeitpunkte k=-N+1 bis k=0 in einer Zuordnungstabelle abgelegt sind, wobei jedem Ausgangsgrössenvektor y(k) und Stellgrössenvektor u(k) für jeden der Abtastzeitpunkte k=-N+1 bis k=0 ein Systemzustandsvektor x(k) und ein Systemzustandsvektor x(k+1) zugeordnet ist.

6. Verfahren nach einem der Ansprüche 1 bis 4, **dadurch gekennzeichnet, dass** die Variationen des Systemzustandsvektors x(k) und des Systemzustandsvektors x(k+1) für jeden der Abtastzeitpunkte k=-N+1 bis k=0 fortlaufend berechnet werden.

## Claims

1. Method for estimating states of a power electronic system (1), the system (1) having a converter circuit (4), said method having the following steps

   (a) determination of output variable vectors y(k) for the sampling times k=-N+1 to k=0, where N is a predefinable sampling horizon,
   (b) determination of manipulated variable vectors u(k) for the sampling times k=-N+1 to k=0,
   (c) determination of a first system model function f(x(k), u(k)) at the sampling time k for describing the power electronic system (1), which function is dependent on the manipulated variable vector u(k) and a system state vector x(k) at the sampling time k,
   (d) determination of a second system model function g(x(k), u(k)) at the sampling time k for describing the power electronic system (1), which function is dependent on the manipulated variable vector u(k) and the system state vector x(k) at the sampling time k,
   **characterized in that**
   a system state vector x(k) is estimated at the sampling time k=0 in the following further steps:
   (e) variation of the system state vector x(k) and the system state vector x(k+1) for each of the sampling times k=-N+1 to k=0, with the result that the sum of the addition of the vector norm from the subtraction of the system state vector x(k+1) and the first system model function f(x(k), u(k)) and the vector norm from the subtraction of the output variable vector y(k) and the second system model function becomes minimal over the sampling times k=-N+1 to k=0,
   (f) selection of the system state vector x(k) at the sampling time k=0;
   (g) the first system model function f(x(k), u(k)) and the second system model function g(x(k), u(k)) each being affine-linear or piecewise affine-linear.

2. Method according to Claim 1, **characterized in that** the absolute value sum norm is respectively selected as vector norm from the subtraction of the system state vector x(k+1) and the first system model function f(x(k), u(k)) and as vector norm from the subtraction of the output variable vector y(k) and the second system model function g(x(k),u(k)).

3. Method according to Claim 1, **characterized in that** the Euclidean norm is respectively selected as vector norm from the subtraction of the system state vector x(k+1) and the first system model function f(x(k), u(k)) and as vector norm from the subtraction of the output variable vector y(k) and the second system model function g(x(k),u(k)).

4. Method according to Claim 1, **characterized in that** the maximum norm is respectively selected as vector norm from the subtraction of the system state vector x(k+1) and the first system model function f(x(k), u(k)) and as vector norm from the subtraction of the output variable vector y(k) and the right-hand side of the second system model function g(x(k),u(k)).

5. Method according to one of Claims 1 to 4, **characterized in that** the variations in the system state vector x(k) and the system state vector x(k+1) for each of the sampling times k=-N+1 to k=0 are stored in an allocation table, a system state vector x(k) and a system state vector x(k+1) being allocated to each output variable vector y(k) and manipulated variable vector u(k) for each of the sampling times k=-N+1 to k=0.

6. Method according to one of Claims 1 to 4, **characterized in that** the variations in the system state vector x(k) and the system state vector x(k+1) for each of the sampling times k=-N+1 to k=0 are calculated continuously.

**Revendications**

1. Procédé d'estimation des états d'un système électronique de puissance (1), le système (1) présentant un circuit convertisseur (4), avec les étapes suivantes

(a) détermination de vecteurs de grandeur initiale y(k) pour les instants d'échantillonnage k = -N+1 à k = 0 , N étant un horizon d'échantillonnage prédéfinissable,
(b) détermination de vecteurs de grandeur de commande u(k) pour les instants d'échantillonnage k = -N+1 à k = 0,
(c) détermination d'une première fonction de modèle du système f(x(k), u(k)) pour l'instant d'échantillonnage k afin de décrire le système électronique de puissance (1), laquelle est dépendante du vecteur de grandeur de commande u(k) et d'un vecteur d'état du système x(k) à l'instant d'échantillonnage k,
(d) détermination d'une deuxième fonction de modèle du système g(x(k), u(k)) pour l'instant d'échantillonnage k afin de décrire le système électronique de puissance (1), laquelle est dépendante du vecteur de grandeur de commande u(k) et du vecteur d'état du système x(k) à l'instant d'échantillonnage k,
**caractérisé en ce**
**que** l'estimation d'un vecteur d'état du système x(k) à l'instant d'échantillonnage k = 0 s'effectue au cours des étapes supplémentaires suivantes :
(e) variation du vecteur d'état du système x(k) et du vecteur d'état du système x(k+1) pour chacun des instants d'échantillonnage k = -N+1 à k = 0, de sorte que la somme de l'addition de la norme vectorielle obtenue à partir de la soustraction du vecteur d'état du système x(k+1) moins la première fonction de modèle du système f(x(k), u(k)) et de la norme vectorielle obtenue à partir de la soustraction du vecteur de grandeur initiale y(k) moins la deuxième fonction de modèle du système sur les instants d'échantillonnage k = -N+1 à k = 0 soit minimale,
(f) sélection du vecteur d'état du système x(k) à l'instant d'échantillonnage k = 0 ;
(g) la première fonction de modèle du système f(x(k), u(k)) et la deuxième fonction de modèle du système g(x(k), u(k)) étant respectivement linéaire affine ou partiellement linéaire affine.

2. Procédé selon la revendication 1, **caractérisé en ce que** la norme du total des valeurs absolues est à chaque fois choisie comme norme vectorielle obtenue à partir de la soustraction du vecteur d'état du système x(k+1) moins la première fonction de modèle du système f(x(k), u(k)) et comme norme vectorielle obtenue à partir de la soustraction du vecteur de grandeur initiale y(k) moins la deuxième fonction de modèle du système g(x(k), u(k)).

3. Procédé selon la revendication 1, **caractérisé en ce que** la norme euclidienne est à chaque fois choisie comme norme vectorielle obtenue à partir de la soustraction du vecteur d'état du système x(k+1) moins la première fonction de modèle du système f(x(k), u(k)) et comme norme vectorielle obtenue à partir de la soustraction du vecteur de grandeur initiale y(k) moins la deuxième fonction de modèle du système g(x(k), u(k)).

4. Procédé selon la revendication 1, **caractérisé en ce que** la norme maximale est à chaque fois choisie comme norme vectorielle obtenue à partir de la soustraction du vecteur d'état du système x(k+1) moins la première fonction de modèle du système f(x(k), u(k)) et comme norme vectorielle obtenue à partir de la soustraction du vecteur de grandeur initiale y(k) moins le côté droit de la deuxième fonction de modèle du système g(x(k), u(k)).

5. Procédé selon l'une des revendications 1 à 4, **caractérisé en ce que** les variations du vecteur d'état du système x(k) et du vecteur d'état du système x(k+1) sont enregistrées dans un tableau d'affectation pour chacun des instants d'échantillonnage k = -N+1 à k = 0, un vecteur d'état du système x(k) et un vecteur d'état du système x(k+1) étant associés à chaque vecteur de grandeur initiale y(k) et vecteur de grandeur de commande u(k) pour chacun des instants d'échantillonnage k = -N+1 à k = 0.

6. Procédé selon l'une des revendications 1 à 4, **caractérisé en ce que** les variations du vecteur d'état du système x(k) et du vecteur d'état du système x(k+1) sont calculées continuellement pour chacun des instants d'échantillonnage k = -N+1 à k = 0.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1670135 A1

**In der Beschreibung aufgeführte Nicht-Patentliteratur**

- Braided extended Kalman filters for sensorless estimation in inductionmotors at high-low/zero speed. *IET Control Theory, Appl.,* 2007